Europäisches Patentamt

European Patent Office

Office européen des brevets

(11) Veröffentlichungsnummer : **0 108 907**
**B1**

(12)
# EUROPÄISCHE PATENTSCHRIFT

(45) Veröffentlichungstag der Patentschrift :
19.08.87

(51) Int. Cl.⁴ : **G 21 C 3/32**

(21) Anmeldenummer : 83109865.2

(22) Anmeldetag : 03.10.83

(54) Kernreaktorbrennelement mit leicht ziehbarer Stabhalteplatte.

(30) Priorität : 15.10.82 DE 3238297

(43) Veröffentlichungstag der Anmeldung :
23.05.84 Patentblatt 84/21

(45) Bekanntmachung des Hinweises auf die Patenterteilung : 19.08.87 Patentblatt 87/34

(84) Benannte Vertragsstaaten :
DE FR GB IT

(56) Entgegenhaltungen :
EP-A- 0 065 238
DE-A- 1 439 936
DE-A- 2 721 869
DE-A- 3 150 477
FR-A- 2 195 824
FR-A- 2 426 311
GB-A- 1 478 985
US-A- 3 389 056
US-A- 3 481 021
US-A- 3 917 335
PATENTS ABSTRACTS OF JAPAN, Band 3, Nr. 154
(M-85), 18. Dezember 1979, Seiten 34 M 85

(73) Patentinhaber : INTERATOM Gesellschaft mit beschränkter Haftung
Friedrich-Ebert-Strasse
D-5060 Bergisch Gladbach 1 (DE)

(72) Erfinder : Wieres, Ludwig, Dipl.-Ing.
Oppelnerstrasse 2
D-5063 Overath (DE)
Erfinder : Bestenreiner, Georg, Dipl.-Ing.
Rothenbacher Weg 16
D-5064 Rösrath (DE)

(74) Vertreter : Mehl, Ernst, Dipl.-Ing. et al
Postfach 22 01 76
D-8000 München 22 (DE)

## Beschreibung

Die vorliegende Erfindung betrifft ein Kernreaktorbrennelement nach dem Oberbegriff des ersten Anspruchs. Derartige Brennelemente sind in einer Vielzahl von Ausführungsformen bekannt. Gemeinsam ist ihnen, daß die Brennstäbe gegen die üblicherweise von unten nach oben durch das Element gerichtete Kühlmittelströmung in einer nahe dem unteren Ende des Elementes angeordneten Stabhalteplatte festgehalten werden. Dabei sind die einzelnen Brennstäbe in der Stabhalteplatte vielfach verschraubt oder durch plastische Verformung des Stabendes befestigt worden. Derartige Verbindungen sind bei der der Wiederaufarbeitung des Brennstoffes vorangehenden Demontage der Brennelemente nicht oder unter Einsatz fernbedienter Werkzeuge nur schwer wieder lösbar. Zur Erleichterung der Demontage hat die Anmelderin bereits früher in der DE-A-27 21 869 eine lösbare Stabbefestigung vorgeschlagen. Bei dieser Konstruktion sind die Stäbe in ihrer Halteplatte verriegelt, so lange sich diese innerhalb des Brennelementhüllkastens befindet ; zur Demontage ist also das Ziehen des ganzen Bündels aus dem Hüllkasten erforderlich und ein Ziehen und Wiedereinsetzen eines einzelnen, als schadhaft erkannten Brennstabes zur Reparatur des Brennelementes ist nicht möglich. Letzteres gilt auch für die in der FR-A-2 426 311 dargestellte Konstruktion, bei der das Bündel der Brennstäbe in zwei konzentrisch zueinander angeordnete Teilbündel unterteilt ist, um mit geringeren Kräften beim Ziehen der Brennstäbe aus dem Element auszukommen. Die Stabhalteplatten sind hier am Hüllkasten festgeschweißt, so daß ein Lösen derselben und das Herausziehen der Brennstäbe die Abtrennung des entsprechenden Teils des Hüllkastens voraussetzt. Ein so behandeltes Element ist nicht mehr reparierbar.

Aufgabe der vorliegenden Erfindung ist ein Kernreaktorbrennelement, das durch die Ausbildung der Befestigung der Brennstäbe in der Stabhalteplatte sowohl das Auswechseln eines einzelnen Brennstabes gestattet als auch eine einfache, mit geringem Kraftaufwand und mit möglichst geringem Einsatz von spanenden Werkzeugen durchzuführende Demontage des Elementes erlaubt.

Die Lösung dieser Aufgabe geschieht durch die im kennzeichnenden Teil des ersten Anspruchs angegebenen Mittel. Die Stabhalteplatten bieten günstige Angriffspunkte für die zum Ziehen benutzten Greifwerkzeuge, wobei die Anzahl der Teilbündel und damit die Zahl der Stäbe in jedem derselben so gewählt werden kann, daß zum Ziehen der (unter der Einwirkung der Neutronenbestrahlung verformten) Brennstäbe jeweils nur eine solche Kraft einzusetzen ist, die die Integrität der langen und sehr dünnwandigen Brennstäbe nicht gefährdet. Dadurch, daß jeder Brennstab einzeln aus- und wiedereinbaubar ist, ergibt sich die Möglichkeit, ein Brennelement, in dem einer der mehreren hundert Brennstäbe defekt geworden ist, unter verhältnismäßig geringem Aufwand zu reparieren.

Im zweiten Anspruch wird eine besondere Lösung für solche Brennelemente vorgeschlagen, die nur eine einzige, sonst keine Angriffspunkte für ein Ziehwerkzeug bietende Stabhalteplatte aufweisen.

Der dritte Anspruch definiert eine Ausgestaltung dieses Erfindungsgedankens, bei der das Entfernen des Elementfußes ausreicht, um die Stabhalteplatten einfach aus dem Hüllkasten herausziehen zu können. Weitere Operationen, etwa mit spanenden Werkzeugen sind nicht erforderlich.

Die im vierten Anspruch geforderte Bemessung der Öffnungen in den Stabhalteplatten (durch die hindurch das zur Kühlung der Brennstäbe verwendete Fluid hindurchtreten muß) stellt einesteils eine Fixierung der Brennstäbe in der Längsausdehnung des Elementes sicher und gestattet andererseits ein leichtes Ziehen eines einzelnen Brennstabes aus dem Bündel sowie das spätere Einschieben eines Ersatzstabes. Der Durchmesser der Öffnungen in der Stabhalteplatte ist dabei etwas größer als derjenige der Brennstäbe selbst im unbestrahlten Zustand zu wählen, um später einen leichten Durchgang des durch Neutronenstrahlung insbesondere in seinem mittleren Bereich aufgeschwollenen Stabes zu ermöglichen.

Zwei Ausführungsbeispiele der Erfindung sind in der Zeichnung dargestellt und zwar zeigt

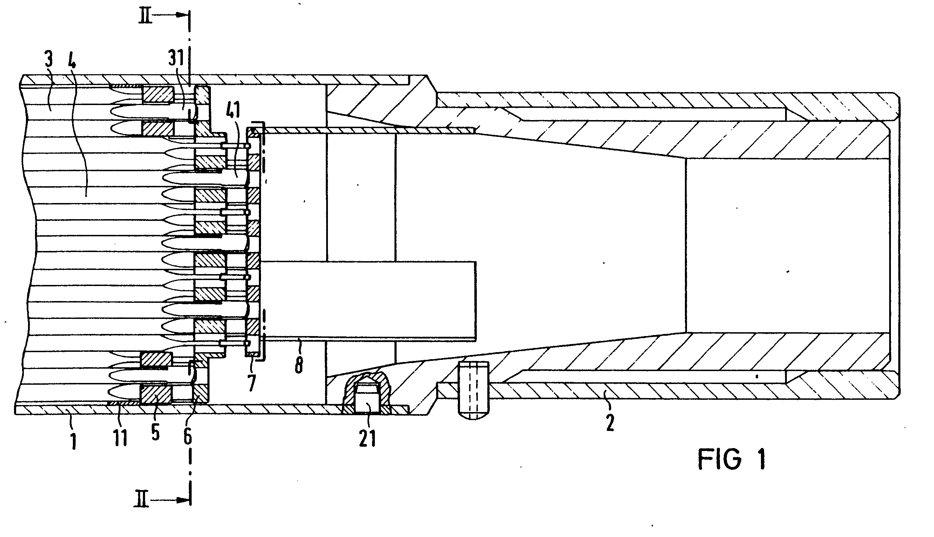

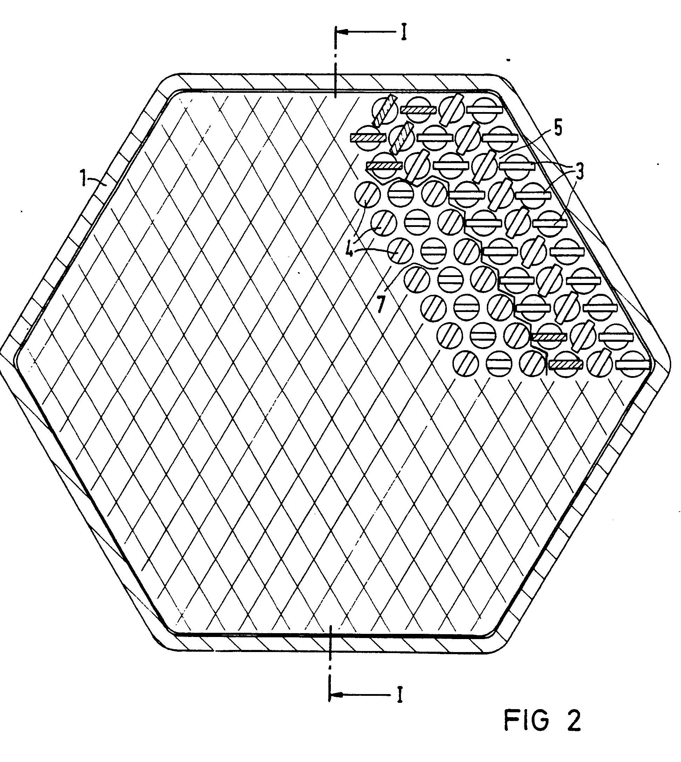

Figur 1 den unteren Teil des montierten Brennelementes im Längsaxialschnitt entsprechend der Linie I-I der Fig. 2

Figur 2 einen Querschnitt entsprechend der Linie II-II der Fig. 1,

Figuren 3-5 drei aufeinanderfolgende Stadien der Demontage des in der Fig. 1 gezeigten Brennelementes. Dabei ist das Brennelement, das im Betrieb senkrecht angeordnet ist, entsprechend den bei der Demontage vorauszusetzenden Verhältnissen in waagerechter Lage dargestellt, und

Figur 6 eine Ausführungsform für ein Element mit nur einer Stabhalteplatte.

Das Brennelement besteht aus einem im Beispiel sechseckigen Hüllkasten 1, der an seinem unteren Ende mittels Stiften 21 mit einem sich verjüngendem Fuß 2 verbunden ist, mit dessen Hilfe das Element in einer entsprechenden Öffnung in einer hier nicht gezeigten Kerntragplatte fixiert ist. Durch die Öffnung im Fuß 2 fließt im Betrieb das Kühlmittel aufwärts und führt dabei die in Brennstäben 3, 4 erzeugte Wärme ab. Die Brennstäbe 3 sind zu einem äußeren und die Brennstäbe 4 zu einem inneren Bündel zusammengefaßt, die konzentrisch zueinander angeordnet sind. Die Brennstäbe 3, 4 sind an ihren Enden abgeflacht und mit gegenüber dem übrigen Durchmesser verdickten Enden 31, 41 versehen. Auf der Innenseite des Hüllkastens 1 sind Anschläge 11 angeschweißt, die den Weg einer lose in den Hüllkastens 1 eingeschobenen oberen Stabhalteplatte 5 begrenzen. Diese ist ringförmig ausgestaltet und deckt nur den Bereich des äußeren Stabbündels ab. Dabei ist sie mit Öffnungen für den Durchtritt des Kühlmittels versehen, die jedoch kleiner als die verdickten Brennstabenden 31 sind, so daß die Brennstäbe 3 durch die obere Stabhalteplatte 5 in der einen Richtung gehalten werden. Ebenfalls lose in das Hüllrohr 1 eingeschoben ist eine sich über den gesamten Querschnitt desselben erstreckende untere Stabhalteplatte 6, die ebenfalls mit Öffnungen für den Durchtritt des Kühlmittels versehen ist. Im Bereich des äußeren Stabbündels sind diese Öffnungen kleiner als die verdickten Brennstabenden 31, die somit in der anderen Richtung gehalten werden und andererseits als Distanzstücke zwischen oberer 5 und unterer Stabhalteplatte 6 wirken. Im Bereich des inneren Brennstabbündels sind die Öffnungen kleiner als die verdickten Brennstabenden 41, so daß auch diese in der einen Richtung fixiert werden. Die Öffnungen in den Stabhalteplatten 5, 6 sind dabei so bemessen, daß die Brennstäbe 3, 4 bis zum Anschlag ihrer verdickten Enden 31, 41 hindurchgeschoben werden können. Die Fixierung der Brennstäbe 4 des inneren Stabbündels in der anderen Richtung erfolgt durch eine Gegenplatte 7, die über Stützen 8 fest mit dem Brennelementfuß 2 verbunden ist. Die Öffnungen in ihr sind kleiner als die verdickten Brennstabenden 41, so daß die Gegenplatte die Brennstäbe 4 des inneren Bündels der anderen Richtung sichert. Zugleich wirken die verdickten Brennstabenden 41 als Distanzstücke zwischen der unteren Stabhalteplatte 6 und der Gegenplatte 7.

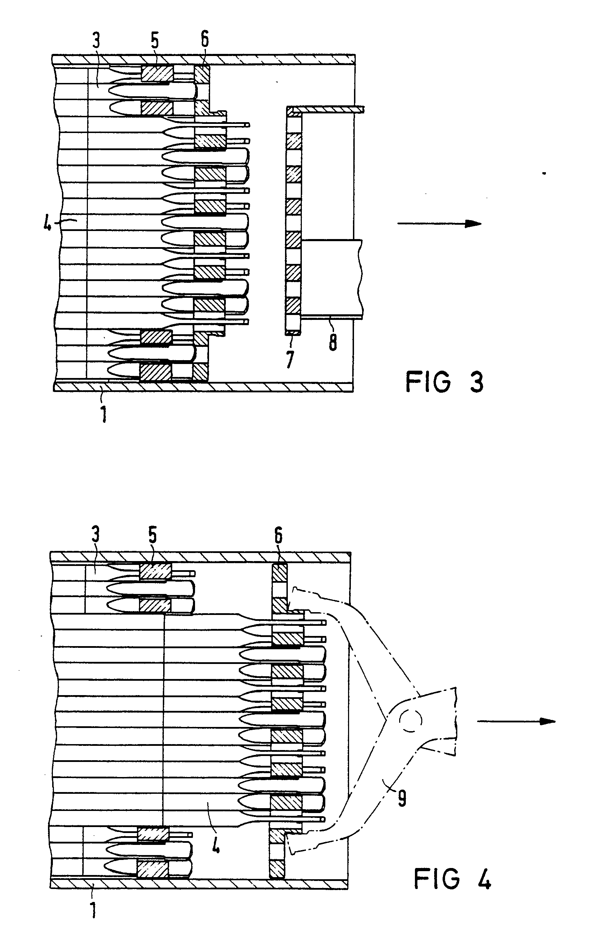

In der Darstellung der Fig. 3 ist der Brennelementfuß 2 vom Hüllkasten 1 durch einen Sägeschnitt getrennt worden, (wenn der im Element enthaltene Brennstoff wiederaufgearbeitet werden soll), bzw. sind im Reparaturfall die Stifte 21 gelöst worden, und ersterer kann mitsamt der Gegenplatte 7 in der durch den Pfeil angedeuteten Richtung entfernt werden. Einzelne Brennstäbe 4 des inneren Bündels können dann durch ein geeignetes, hier nicht dargestelltes, zangenartiges Greifwerkzeug an ihren verdickten Enden 41 aus dem Bündel herausgezogen werden. Da die Öffnungen in den Stabhalteplatten 5, 6 größer als der Durchmesser der Brennstäbe 3, 4 im unbestrahlten Zustand sind, ist auch ein Herausziehen von solchen Stäben ohne Anwendung größerer Kräfte möglich, die auf einem Teil ihrer Länge infolge der Neutronenbestrahlung ihren Durchmesser durch Schwellen vergrößert haben. Ein neuer Brennstab 4 für einen wegen eines Defektes herausgezogenen kann ohne Schwierigkeiten in die untere Stabhalteplatte 6 eingeschoben werden. Der Brennelementfuß kann mittels der Stifte 21 dann wieder mit dem Hüllkasten 1 verbunden werden, wodurch die Gegenplatte 7 wieder in ihre die Brennstäbe 4 festhaltende Position gebracht wird.

Es kann aber auch wie in der Fig. 4 gezeigt, das innere Stabbündel als ganzes aus dem Hüllkasten gezogen werden, indem ein Greifer 9 in zu diesem Zweck in der unteren Stabhalteplatte 6 angebrachte Hinterschneidungen faßt.

Ist das innere Stabbündel gezogen, so werden die Brennstäbe 3 des äußeren Stabbündels für ein Einzelauswechseln zugänglich, wie es oben für das innere Stabbündel beschrieben wurde.

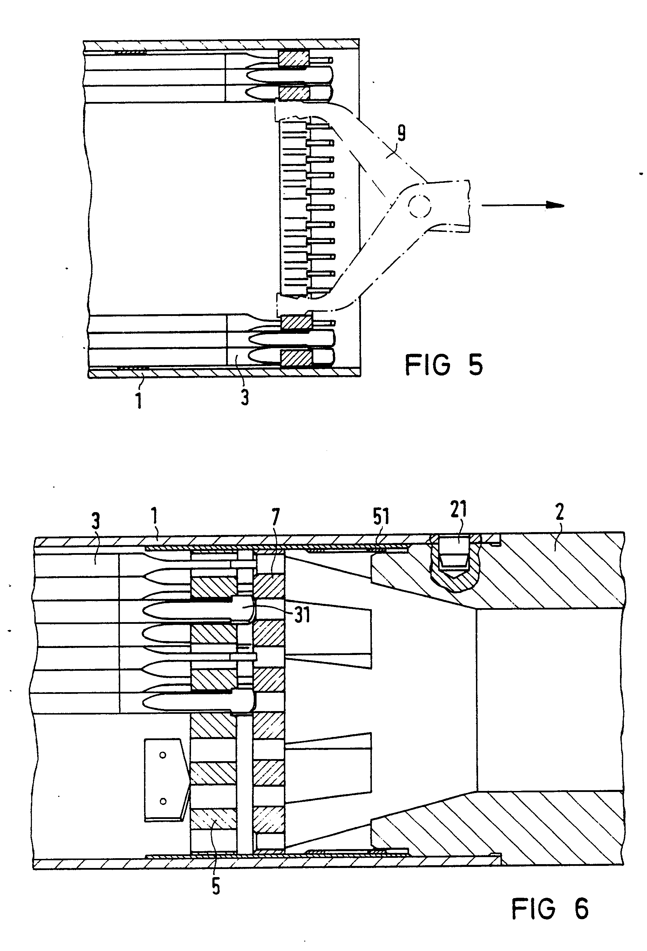

Wie die Fig. 5 zeigt, kann jedoch auch der Greifer 9 in entsprechende Hinterschneidungen der oberen Stabhalteplatte 5 greifen und das äußere Stabbündel als ganzes ziehen. Die dabei aufzuwendenden Kräfte sind, da nur etwa die Hälfte der mehrere hundert Stück zählenden Brennstäbe auf einmal aus den hier nicht dargestellten, weiter oben im Hüllrohr angeordneten Abstandshaltern gezogen werden muß auch sehr viel geringer und mit Sicherheit innerhalb der für die Festigkeit der dünnwandigen Brennstäbe und Abstandshalter zulässigen Werte.

Die Fig. 6 zeigt eine Ausführungsform für ein Brennelement, bei dem (z. B. wegen einer geringeren Anzahl von Brennstäben 3) auf die Teilung der Stabhalteplatte 5 verzichtet werden kann. Um diese trotzdem leicht ziehen zu können, ist sie mit Fortsätzen 51 versehen, die durch die Gegenplatte 7 hindurchragend beliebige Hinterschneidungen, wie z. B. Löcher aufweisen, in die der Greifer 9 fassen kann.

## Patentansprüche

1. Kernreaktorbrennelement bestehend aus einer Vielzahl von in einem Hüllkasten (1) parallel zueinander angeordneten Brennstäben (3, 4) die an ihrem einen (unteren) Ende in einer oder mehreren in parallelen Querschnittsebenen des Elements angeordneten, mit Öffnungen für den Durchtritt des Kühlmittels versehenen Stabhalteplatten (5, 6) gehaltert sind, dadurch gekennzeichnet, daß die Stabhalteplatten (5, 6) im Hüllkasten (1) lösbar befestigt und mit Hinterschneidungen versehen sind, in die ein vom einen (unteren) Ende des Elementes her eingeführtes Ziehwerkzeug (9) eingreifen kann und daß jeder Brennstab (3, 4) einzeln aus seiner Stabhalteplatte ausbaubar ist.

2. Element nach Anspruch 1 mit nur einer Stabhalteplatte (5), dadurch gekennzeichnet, daß die Hinterschneidungen für das Ziehwerkzeug in Fortsätzen (51) der Stabhalteplatte (5) angebracht sind, die sich in Richtung auf den Elementfuß (2) erstrecken.

3. Element nach Anspruch 1 oder 2, dadurch gekennzeichnet, daß die Stabhalteplatten (5, 6) im Hüllkasten (1) zwischen an diesem befestigten Anschlägen (11) und einer Gegenplatte (7) gehalten sind, die an dem das eine (untere) Ende des Elementes verschließenden Fuß (2) befestigt ist.

4. Element nach Anspruch 1 oder 2, dadurch gekennzeichnet, daß die Öffnungen in den Stabhalteplatten (5, 6) und der Gegenplatte (7) größer als der Durchmesser der Brennstäbe (3, 4) jedoch kleiner als die verdickten Enden (31, 41) derselben sind.

**Claims**

1. A nuclear reactor fuel element consisting of a plurality of fuel rods (3, 4) which are disposed parallel to one another in a container (1) and are retained at one of their ends (the lower end) in one or more rod retaining plates (5, 6) which are disposed in parallel transverse planes of the element and are provided with openings for the passage of the coolant, characterised in that the rod retaining plates (5, 6) are detachably fixed in the container (1) and are provided with undercuts into which an extraction tool (9) introduced from one end (the lower end) of the element can engaged, and in that each fuel rod (3, 4) can be extracted individually from its rod retaining plate.

2. An element according to claim 1 having only one rod retaining plate (5), characterised in that the undercuts for the extraction tool are located in projections (51) on the rod retaining plate (5) which extend towards the base (2) of the element.

3. An element according to claim 1 or claim 2, characterised in that the rod retaining plates (5, 6) are held in the container (1) between stops (11) fixed to the latter and a backing plate (7) which is fixed to the base (2) closing one end (the lower end) of the element.

4. An element according to claim 1 or claim 2, characterised in that the openings in the rod retaining plates (5, 6) and the backing plate (7) are larger than the diameter of the fuel rods (3, 4) but smaller than the thickened ends (31, 41) of the fuel rods.

**Revendications**

1. Elément combustible de réacteur nucléaire, comprenant un grand nombre de barreaux ou aiguilles de combustible (3, 4) disposés parallèlement entre eux dans une gaine externe (1) et qui sont maintenus à l'une de leurs extrémités (extrémité inférieure) dans une ou plusieurs plaques de maintien d'aiguilles (5, 6) disposées dans des plans parallèles à la section droite de l'élément et pourvues d'ouvertures pour le passage du caloporteur, caractérisé en ce que les plaques de maintien d'aiguilles (5, 6) sont fixées amovibles dans la gaine (1) et sont pourvues de cavités pour l'accrochage d'un outil d'extraction (9) introduit par une extrémité de l'élément (extrémité inférieure), et que chaque aiguille de combustible (3, 4) peut être démontée individuellement de sa plaque de maintien d'aiguilles.

2. Elément selon la revendication 1 avec seulement une plaque de maintien d'aiguilles (5), caractérisé en ce que les cavités pour l'outil d'extraction sont ménagées dans des prolongements (51) de la plaque de maintien (5), prolongements qui s'étendent en direction du pied (2) de l'élément.

3. Elément selon la revendication 1 ou 2, caractérisé en ce que les plaques de maintien d'aiguilles (5, 6) sont tenues dans la gaine (1) entre des butées (11) fixées à la gaine et une contre-plaque (7) qui est fixée au pied (2) fermant ladite extrémité (inférieure) de l'élément.

4. Elément selon la revendication 1 ou 2, caractérisé en ce que les ouvertures des plaques de maintien d'aiguilles (5, 6) et de la contre-plaque (7) sont plus grandes que le diamètre des aiguilles de combustible (3, 4) mais plus petites que les extrémités épaisses (31, 41) de ces aiguilles.

FIG 1

FIG 2

FIG 3

FIG 4

FIG 5

FIG 6